Europäisches Patentamt

European Patent Office

Office européen des brevets

(11) Publication number: **0 235 436**
**A2**

(12)

# EUROPEAN PATENT APPLICATION

(21) Application number: **86307409.2**

(22) Date of filing: **26.09.86**

(51) Int. Cl.4: **B01D 35/20**

(30) Priority: **28.02.86 JP 41393/86**

(43) Date of publication of application:
**09.09.87 Bulletin 87/37**

(84) Designated Contracting States:
**DE FR GB NL**

(71) Applicant: **KABUSHIKI KAISHA SANSHIN
SEISAKUSHO**
**22-2, Kameshima 2-chome Nakamura-ku
Nagoya-shi Aichi 453(JP)**

(72) Inventor: **Shirato, Monpei**
**6-30 Hikarigaoka 2-chome
Chikusa-ku Nagoya-shi Aichi 464(JP)**
Inventor: **Yagishita, Aisaburo**
**5-2 Shinposho 4-chome
Chikusa-ku Nagoya-shi Aichi 453(JP)**
Inventor: **Iritani, Eiji**
**510 Nishi Issha Hiatsu 1-107 Takayashiro
Meito-ku Nagoya-shi Aichi 465(JP)**
Inventor: **Yagishita, Kazuhiko**
**5-2 Shinposho 4-chome
Chikusa-ku Nagoya-shi Aichi 453(JP)**

(74) Representative: **Pearce, Anthony Richmond et
al**
**MARKS & CLERK Alpha Tower Suffolk Street
Queensway Birmingham B1 1TT(GB)**

(54) **Method of filtering a suspension.**

(57) A method and apparatus for filtering and con-
centrating a suspension (5) containing a solid sus-
pended substance using a filter (2) comprises vibrat-
ing a board member (3) provided in the suspension
(5) facing the surface of the filter (2) in a direction
parallel to the filter surface. The board member (3) is
provided at a distance of preferably 10 mm or less
from the filter surface

FIG. 1

## METHOD OF FILTERING A SUSPENSION

The present invention relates to a method of filtering a suspension to efficiently recover a liquid medium and obtain a concentrated suspension.

Various filtration methods are used in filtering a suspension to recover a liquid medium. In the case where a filter material having a high density is used to carry out highly efficient filtration so as to prevent the suspended material from leaking through into the filtrate, there will arise a problem that filtration efficiency is reduced in association because of deposition of a dense cake of suspended material on the filter surface. To cope with this problem, there has been proposed a vibration filtration method for efficiently achieving concentration of the suspension and recovery of the filtrate, by preventing deposition of the cake on the filter surface thereby to enable continuous filtration for a long period of time.

In such a conventional vibration filtration method as mentioned above, while filtration is carried out by vibrating the filter equipment as a whole, deposition of the cake cannot be completely prevented, and furthermore, fastenings used in the filter equipment tend to become loosened. Furthermore, there has been proposed a method of filtering a liquid by vibrating a filter medium or its associated parts only, so as to prevent deposition of the cake on the filter medium (Japanese Patent Publication No. 58-27972).

In the conventional filtration methods as mentioned above, while a rate of deposition of the cake onto the filter medium may be reduced, it is necessary to reinforce the filter equipment or the associated parts to which vibration is applied, so as to withstand the vibration. As a result, weight is increased to reduce energy efficiency, and the filter medium is easily damaged by fatigue.

### SUMMARY OF THE INVENTION

It is a primary object of the present invention to provide a method of filtering a suspension, which may prevent a cake from being deposited on the filter surface and in which the filtrate can be recovered from the suspension for an extended period of time with high efficiency.

It is another object of the present invention to provide a method of filtering a suspension which may lead to an increase in the yield of a filtrate per unit operation time.

It is a further object of the present invention to provide a method of filtering a suspension which can reduce energy consumption and any troubles of a filter apparatus and a filter material to ensure a long life.

According to the present invention, a method of filtering a suspension containing a solid suspended substance is characterised in that a board member is provided in the suspension facing the filter surface, and is vibrated in a direction parallel to the filter surface.

The distance between the board member and the filter surface is preferably 10 mm or less.

The filter medium provided in the filter apparatus to be used in the method of the present invention is preferably fixed, and the filter surface thereof is preferably planar or cylindrical. The board member preferably has a shape and orientation such that it is disposed at a substantially uniform distance from the filter surface. Therefore, the board member is preferably planar or cylindrical in correspondence with the shape of the filter surface. The surface of the board member facing the filter surface is not necessarily smooth, but it may be a rough surface having fine unevenness, or it may be formed with projections thereon or grooves therein. A rear surface of the board member may be formed in any appropriate shape, and it may be arranged opposite to an adjacent filter surface. In this latter case, the board member may be formed with a through-hole extending between its major surfaces. Further, in the case where the board member includes a passage for the suspension to be or being filtered, the suspension may be concentrated more efficiently.

The distance between the board member and the filter surface is preferably 10 mm or less, as mentioned above. If the distance is too large, the efficiency of concentration of the suspension is less improved. In contrast, if the distance is too small, the filter surface can be injured during vibration of the board member, and the suspension is insufficiently diffused and circulated, causing reduction in efficiency. Therefore, the distance is preferably set to a suitable value in consideration of the dimensional accuracy of the filter surface and the board member.

The vibration conditions to which the board member is subjected in the present invention are not especially limited. However, if the vibration frequency is too low and the amplitude is too small, the beneficial effects of the present invention are limited. In contrast, the higher the frequency, and the greater the amplitude, the greater becomes the energy consumption. Therefore, it is preferred to select suitable conditions according to the apparatus used in the present invention and property of the suspension to be concentrated.

Other objects and features of the invention will be more fully understood from the following detailed description and appended claims when taken with the accompanying drawings.

## BRIEF DESCRIPTION OF THE DRAWINGS.

Fig. 1 is an illustration of an experimental equipment for embodying the method of filtering a suspension according to the present invention; and

Fig. 2 is a graph showing the relation between a total amount of the filtrate passing through the filter surface per unit area and the filtration resistance in filtering the suspension.

## DETAILED DESCRIPTION OF THE PREFERRED EMBODIMENT.

### Reference Example.

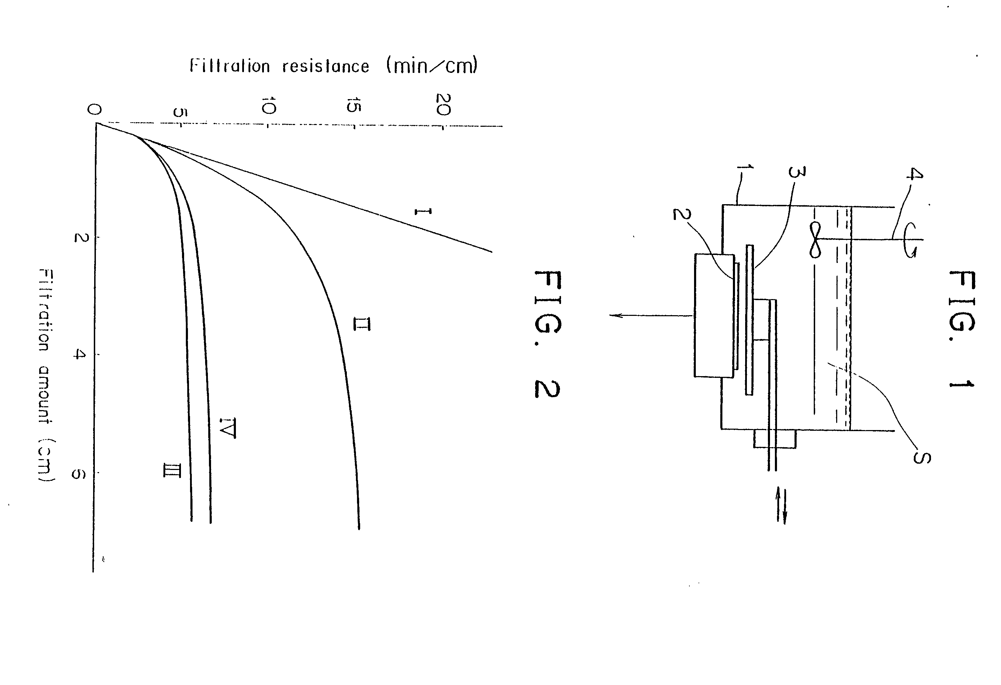

Referring to Fig. 1, a flat filter cloth 2 having a filtration area of 25 cm² was horizontally disposed in a bottom portion of a filter tank 1. Into the filter tank 1, a 20 wt% aqueous dispersion S of Korean Kaolin was poured. Then the pressure on the underside of the filter cloth 2 was reduced while the dispersion S was being stirred by means of a stirrer 4. As the result, the amount of filtrate relative to the filtration time was measured, and the filtration velocity was calculated.

When the filtration was continued under a reduced pressure of 36 kPa without vibrating a vibration plate 3, a cake was deposited on the filter cloth 2 as the filtration time elapsed and the filtration velocity gradually reduced. Then the total amount - (cm) of the filtrate having passed through the filter cloth per unit filtration area was compared with the inverse of the filtration velocity, i.e. filtration resistance (min/cm), to obtain a proportional relationship as shown by line I in Fig. 2.

### Example 1

With use of the apparatus as described above in the Reference Example, a vibration plate 3 was provided over the filter surface (i.e. the upper surface of the filter medium in parallel relation therewith. The vibration plate 3 was formed by a planar board having a surface area larger than the filtration surface. The distance between the filter surface and the major surface of the vibration facing the plate was set to 1.5 mm. In a similar way to the Reference Example, a 20 wt% aq. dispersion of Korean Kaolin was filtered but, with the vibration plate 3 being vibrated at a vibration frequency of 8 sec$^{-1}$ and an amplitude of 5 mm.

The filtrate was completely transparent, and the relation between the total amount of the filtrate passed through the filter cloth per unit area and the filtration resistance is shown by Curve II in Fig. 2. As is apparent from the result, the filtration resistance reaches a maximum at about 15 min/cm, and even with the filtration is continued, the amount of the cake deposited is not increased, and filtration efficiency is not reduced.

### Example 2.

The vibration plate 3 was formed by a board member having a surface area larger then filter surface of the filter material, the board member being formed with a plurality of square section projections, each having a width of 2 mm and a height of 2 mm, and arranged at intervals of 20 mm on its surface facing the filter surface. The distance between the filter surface and the tops of the projections was set to 1.3 mm. Then, filtration was carried out under the same conditions as in Example 1 except the vibration frequency was 23 sec$^{-1}$ and the amplitude was 5 mm.

The result of the filtration is shown by curve III in Fig. 2, and it will be appreciated that the filtration resistance does not increase above about 6 min/cm.

### Example 3

The vibration plate 3 was formed by a board member having a surface area larger than the filter surface of the filter medium, the board member being formed with a plurality of square section grooves, each having a width of 2 mm and a depth of 2 mm, and arranged at intervals of 20 mm on its surface facing the filter surface. The distance between the filter surface and the adjacent surface of the board member was set to 1.5 mm. Filtration was carried out under the same conditions as in Example 1 except that the vibtration frequency was 30 sec$^{-1}$ and the amplitude was 5 mm.

The result of the filtration is shown by curve IV in Fig. 2, and it would be appreciated that the filtration resistance does not increase above about 7 min/cm.

**Claims**

1. A method of filtering and concentrating a suspension containing a solid suspended substance using a filter medium, comprising the step of vibrating a board member provided in said suspension facing the surface of the filter medium in a direction substantially parallel to the filter surface.

2. A method as claimed in claim 1, wherein said board member is disposed at a distance of 10 mm or less from the filter surface.

3. A method as claimed in claim 1 or 2, wherein said board member includes a plurality of projections provided on the surface thereof facing the filter surface.

4. A method as claimed in claim 1 or 2, wherein said board member includes a plurality of grooves or recesses provided in the surface thereof which faces the filter surface.

5. Apparatus for filtering and concentrating a suspension containing a solid suspended substance, comprising a container for the suspension to be filtered and concentrated, a filter medium having a surface exposed to the interior of the container, a board member mounted in the container so as to face the surface of the filter medium, and means which vibrate the board member in a direction substantially parallel to the surface of the filter medium.

6. Apparatus as claimed in claim 5, wherein said board member is disposed at a distance of 10 mm or less from the filter surface.

7. Apparatus as claimed in claim 5 or 6, wherein said board member includes a plurality of projections provided on the surface thereof which faces the filter surface.

8. Apparatus as claimed in claim 5 or 6, wherein said board member includes a plurality of grooves or recesses provided in the surface thereof which faces the filter surface.

# FIG. 1

# FIG. 2